# EUROPÄISCHE PATENTANMELDUNG

(11) **EP 3 023 683 A1**
(43) Veröffentlichungstag der Anmeldung: **25.05.2016**
(21) Anmeldenummer: 15194879.1
(22) Anmeldetag: 17.11.2015
(51) Int. Cl.: F16L 55/165, B32B 5/02, B32B 1/08, D06N 7/00

(54) **GESTRICKTER LINER MIT LÄNGSDEHNUNGSBREMSE**

(30) Priorität: 24.11.2014 DE 102014117195
(71) Anmelder: SAERTEX multiCom GmbH, 48369 Saerbeck (DE)
(72) Erfinder: Kaiser, Heinz-Georg, 48493 Wettringen (DE)
(74) Vertreter: Claessen, Rolf

(57) **Zusammenfassung**

Die Erfindung betrifft einen Liner, der Gestrick und eine Längsdehnungsbremse aufweist, ein Verfahren zu seiner Installation, sowie eine damit sanierte Rohrleitung oder Kanal.

## Beschreibung

Die Erfindung betrifft einen Liner, der Gestrick und eine Längsdehnungsbremse aufweist, ein Verfahren zu seiner Installation, sowie eine damit sanierte Rohrleitung oder Kanal.

Beispielsweise DE 20 2010 017 654 U1, WO 2012/025497 A1 und WO 2014/012130 A1 beschreiben Liner, die Gestrick umfassen. Diese Liner konnten sich bislang nicht durchsetzen, da gestrickte Liner bislang den Nachteil hatten, dass das Gestrick sehr dehnfähig ist und es daher beim Einziehen oder Inversieren des Liners in zu sanierende Kanäle und Rohrleitungen zu sehr inhomogenen Verteilungen des Liners kam. Diese bislang bekannten Liner haben sich beispielsweise in den Defekten in den Rohren verhakt. Schließlich werden Rohre oder Kanäle deshalb saniert, da es im Verlauf des Rohrs oder Kanals beispielsweise Brüche oder Löcher gibt. Dadurch kam es bislang dazu, dass sich das Gestrick an einigen Stellen im Rohr überworfen hat und an anderen Stellen auseinandergezogen hat und damit dünner geworden ist. Das Rohr oder der Kanal konnten so nur sehr unregelmäßig ausgekleidet werden. Die Sanierung konnte mit den bisherigen Lösungen nicht so durchgeführt werden, dass die sanierten Kanäle den jeweiligen Vorschriften entsprachen. Die Aufgabe der vorliegenden Erfindung ist es daher, einen Liner bereitzustellen, der eine gleichmäßige Auskleidung der zu sanierenden Rohre oder Kanäle ermöglicht.

Die der Erfindung zu Grunde liegende Aufgabe wird in einer ersten Ausführungsform durch einen Liner für die Kanalsanierung gelöst, dadurch gekennzeichnet, dass der Liner
a. ein Gestrick, und
b. eine Längsdehnungsbremse aufweist.

Durch das Gestrick kann sich der Liner hervorragend an die Geometrie des zu sanierenden Kanals oder der zu sanierenden Rohrleitung anpassen. Der erfindungsgemäße Liner hat beispielsweise durch das Gestrick eine hervorragende Bogengängigkeit. Durch die Längsdehnungsbremse wird der Liner gleichmäßiger in dem zu sanierenden Kanal eingebracht. Es ist mit dem erfindungsgemäßen Liner beispielsweise erstmals möglich, inversierbare Hausanschlussliner aus Glasfasern bereitzustellen. Sowohl im Einbauverfahren mit geschlossenem als auch mit offenem Ende wäre eine unkalkulierbare Längsdehnung mit zusätzlichen Kosten für die Nachbearbeitung verbunden.

### Gestrick

Der erfindungsgemäße Liner enthält vorzugsweise wenigstens 50 Gew.%, ganz besonders bevorzugt wenigstens 60 Gew.% Gestrick in Bezug auf den gesamten Anteil an faserhaltigen Materialien (einschließlich gestrickten, gelegten, gewobenen, verklebten und nicht-gewobenen Materialien).

Der erfindungsgemäße Liner enthält vorzugsweise bis zu 90 Gew.%, ganz besonders bevorzugt wenigstens 80 Gew.% Gestrick in Bezug auf den gesamten Anteil an faserhaltigen Materialien. Das Gestrick kann rundgestrickt sein, also ein Schlauchgestrick. Dadurch kann ein nahtloser Liner verwirklicht werden und Unregelmäßigkeiten vermieden werden. Vorzugsweise handelt es sich aber um ein Flachstrick, wobei zwei gegenüberliegende Kanten verbunden sind.

Das Gestrick enthält vorzugsweise wenigstens 60 Gew.% Glasfasern, ganz besonders bevorzugt wenigstens 90 Gew.% Glasfasern, und am meisten bevorzugt besteht das Gestrick aus Glasfasern.

Das Gewicht des Glasfasergarns liegt vorzugsweise in einem Bereich von 300 bis 1200 tex.

Die Glasfasern sind vorzugsweise hochfest. Die Zugfestigkeit der Glasfasern beträgt vorzugsweise wenigstens 2400 MPa gemessen nach ASTM D2343-08. Die Glasfasern sind vorzugsweise ECR-Glasfasern (gemäß DIN 1259-01).

Das Flächengewicht des Gestricks liegt vorzugsweise in einem Bereich von 200 bis 2500 g/m², besonders bevorzugt in einem Bereich von 600 bis 1600 g/m².

Das Gestrick hat vorzugsweise eine Dicke von wenigstens 1,5 mm, insbesondere wenigstens 2 mm. Unabhängig davon hat das Gestrick vorzugsweise eine Dicke von bis zu 5 mm, besonders bevorzugt bis zu 4 mm.

Die Strickart des Gestricks ist vorzugsweise eine Interlockfangverbindung, besonders bevorzugt in Verbindung mit einer Rechts-Links-Grundbindung.

Das Gestrick ist vorzugsweise einlagig.

### Längsdehnungsbremse

Längsdehnungsbremse im Sinne der Erfindung ist vorzugsweise eine beliebige Komponente des Liners, die die Längsdehnung des Liners (Dehnung des Liners in Längsrichtung) verringert.

Ganz besonders bevorzugt umfasst die Längsdehnungsbremse Bremsfasern in Längsrichtung des Liners. Bremsfasern im Sinne der Erfindung können alle Fasern sein, die dazu geeignet sind, die Längsdehnung des Liners herabzusetzen.

Der erfindungsgemäße Liner enthält vorzugsweise bis zu 2 Gew.%, ganz besonders bevorzugt bis zu 1 Gew.% Längsdehnungsbremse in Bezug auf den gesamten Anteil an faserhaltigen Materialien (einschließlich gestrickten, gelegten, verklebten, gewobenen und nicht-gewobenen Materialien).

Die Bremsfasern sind vorzugsweise aus thermoplastischem Material, ganz besonders bevorzugt sind die Bremsfasern Polyesterfasern.

Die Bremsfasern sind vorzugsweise hochfest. Die Zugfestigkeit der Bremsfasern über deren gesamte Länge liegt vorzugsweise in einem Bereich von 50 bis 100 N/mm². gemessen nach EN ISO 13934-1.

Die Länge der einzelnen Bremsfasern liegt vorzugsweise bei wenigstens 1 m, besonders bevorzugt bei wenigstens 2 m, ganz besonders bevorzugt liegt die Bremsfaser als Endlosfaser vor, die sich über die Länge des Liners erstreckt.

Vorzugsweise sind im erfindungsgemäßen Liner wenigstens 10 Bremsfasern, besonders bevorzugt wenigstens 20 Bremsfasern angeordnet. Unabhängig davon sind im erfindungsgemäßen Liner vorzugsweise bis zu 100, besonders bevorzugt bis zu 50 Bremsfasern angeordnet.

Die Längsdehnungsbremse, und insbesondere die Bremsfasern, sind vorzugsweise in Form eines Streifens in Längsrichtung des Liners angeordnet. Der Streifen hat vorzugsweise eine Breite von wenigstens 0,5 cm, besonders bevorzugt eine Breite von wenigstens 1 cm. Unabhängig davon hat der Streifen eine Breite von bis zu 15 cm, besonders bevorzugt eine Breite von bis zu 6 cm.

Der Streifen hat vorzugsweise ein Flächengewicht im Bereich von 20 bis 120 g/m², ganz besonders bevorzugt in einem Bereich von 50 bis 100 g/m².

Die Längsdehnungsbremse und insbesondere der Streifen sind vorzugsweise vollflächig mit dem Gestrick verbunden und besonders bevorzugt verklebt oder flammkaschiert.

Die Längsdehnungsbremse und insbesondere der Streifen sind vorzugsweise ein Klebeband oder ein Synthesefaservlies, das beispielsweise die Bremsfasern enthält.

Die Längsdehnungsbremse ist vorzugsweise außen am Gestrick angeordnet.

Außen im Sinne der Erfindung meint die Außenseite des Gestricks oder Liners vor dem Einbau des Liners in einen Kanal oder ein Rohr. Zum Einbau kann der erfindungsgemäße Liner nämlich gegebenenfalls inversiert werden, so dass die Innenseite des eingebauten Liners (Innenseite des sanierten Rohrs) die Außenseite des Liners vor dem Einbau ist.

### Vlies

Vorzugsweise ist außen um das Gestrick und die Längsdehnungsbremse ein Vlies angeordnet.

Das Vlies ist vorzugsweise mit Längsdehnungsbremse vollflächig verbunden, ganz besonders bevorzugt verklebt.

Das Vlies ist vorzugsweise ein Polypropylenvlies oder ein Polyestervlies.

Das Vlies weist vorzugsweise eine Dehnbarkeit (Reißdehnung über den Umfang - Querdehnung) von wenigstens 35% auf.

Das Flächengewicht des Vlieses liegt vorzugsweise bei wenigstens 80 g/m². Unabhängig davon liegt das Flächengewicht des Vlieses vorzugsweise bei bis zu 300 g/m².

Die Dicke des Vlieses liegt vorzugsweise bei wenigstens 1 mm. Unabhängig davon liegt die Dicke des Vlieses vorzugsweise bei bis zu 3 mm.

Das Vlies ist vorzugsweise ein Nadelvlies.

Das Vlies weist vorzugsweise eine Längsnaht auf. Die Längsnaht ist vorzugsweise gegenüber der Längsdehnungsbremse angeordnet.

Die Längsdehnungsbremse kann alternativ auch vorzugsweise auf der Längsnaht angeordnet sein. Besonders bevorzugt ist die Längsdehnungsbremse auf der einen Seite der Längsnaht und ein Abdeckband auf der anderen Seite der Längsnaht angeordnet. Die Längsdehnungsbremse kann bevorzugt genau mittig auf die Längsnaht aufgeschweißt sein.

Die Längsnaht ist vorzugsweise gegenüber der Längsdehnungsbremse angeordnet.

Außen auf dem Vlies ist vorzugsweise eine Polymerfolie oder eine Polymerschicht angeordnet. Das Flächengewicht der Polymerfolie oder der Polymerschicht liegt vorzugsweise in einem Bereich von 150 bis 300 g/m². Die Dicke der Polymerfolie oder der Polymerschicht liegt vorzugsweise in einem Bereich von 0,1 bis 0,25 mm. Die Polymerfolie oder die Polymerschicht sind vorzugsweise aus Polyurethan.

Die Polymerfolie oder Polymerschicht ist vorzugsweise elastisch. Besonders bevorzugt beträgt die Dehnbarkeit (bezogen auf den Ursprungsdurchmesser, Reißdehnung) wenigstens 35% (Zunahme im Durchmesser).

Die Polymerfolie oder Polymerschicht sind vorzugsweise mit dem Vlies vollflächig verbunden, besonders bevorzugt aufkaschiert oder verklebt.

Außen auf der bevorzugt vorhandenen Längsnaht des Vlieses kann vorzugsweise Abdeckband angeordnet sein. Das Abdeckband hat vorzugsweise wenigstens eine Breite von 10 mm, ganz besonders bevorzug eine Breite von wenigstens 20 mm. Die Breite des Abdeckbandes liegt unabhängig davon vorzugsweise bei bis zu 150 mm, ganz besonders bevorzug bei bis zu 70 mm. Das Abdeckband ist mit dem Vlies vorzugsweise vollflächig verbunden, ganz besonders bevorzugt vollflächig verschweißt oder verklebt. Die Dicke des Abdeckbandes liegt vorzugsweise in einem Bereich 0,1 bis 0,6 mm, ganz besonders bevorzugt in einem Bereich von 0,25 bis 0,55 mm. Das Abdeckband besteht vorzugsweise aus Polyurethan.

Auf dem Vlies ist auf der dem Gestrick zugewandten Seite vorzugsweise Haftvermittler (beispielsweise Sprühkleber) angeordnet. Dieser Haftvermittler kann in Streifenform angeordnet sein. Die Schicht des Haftvermittlers ist vorzugsweise offenporig bzw. mit Poren versehen, damit die Imprägnierung nicht beeinträchtigt wird.

### Liner

Der erfindungsgemäße Liner weist vorzugsweise eine Länge in einem Bereich von 2 bis 100 m, insbesondere in einem Bereich von 4 bis 30 m, ganz besonders bevorzugt in einem Bereich von 6 bis 20 m auf.

Der Durchmesser des erfindungsgemäßen Liners beträgt vorzugsweise wenigstens 5 cm, ganz besonders bevorzugt wenigstens 8 cm. Unabhängig davon beträgt der Durchmesser des erfindungsgemäßen Liners vorzugsweise höchstens 50 cm.

Vorzugsweise handelt es sich bei dem erfindungsgemäßen Liner um einen Hausanschlussliner.

Die ausgehärtete Endwanddicke liegt vorzugsweise im Bereich von 3 bis 5 mm.

Der erfindungsgemäße Liner ist vorzugsweise mit Harz imprägniert (bzw. getränkt). Besonders bevorzugt ist dieses Harz Polyesterharz (gesättigt oder ungesättigt) oder Vinylesterharz oder Epoxidharz oder Mischungen derselben.

Vorzugsweise ist das Harz thixotropiert. Die Viskosität des Harzes liegt vorzugsweise bei wenigstens 5000 mPas·s bei 20 °C und 1 bar. Die Viskosität kann mit einem Brookfield CAP 1000+ Viskosimeter mit der Spindel CAP-S-01 mit einer Umdrehungsgeschwindigkeit von 750 U/min gemessen werden.

### Weitere Ausführungsformen

In einer weiteren Ausführungsform wird die der Erfindung zu Grunde liegende Aufgabe durch einen Kanal oder einer Rohrleitung gelöst, auf deren Innenseite ein erfindungsgemäßer Liner angebracht ist.

Zwischen dem erfindungsgemäßen Liner und dem Kanal oder der Rohrleitung ist vorzugsweise ein Preliner (beispielsweise dünner PVC oder PE Schlauch gegen infiltrierendes Wasser) angeordnet.

Vorzugsweise ist der erfindungsgemäße Liner auf der Innenseite des Kanals oder der Rohrleitung ausgehärtet. Die Endwanddicke liegt vorzugsweise in einem Bereich von 3 bis 5 mm.

In einer weiteren Ausführungsform wird die der Erfindung zu Grunde liegende Aufgabe durch ein Verfahren zur Sanierung einer Rohrleitung oder eines Kanals gelöst, dadurch gekennzeichnet, dass der mit Harz imprägnierte erfindungsgemäße Liner
a. an einem Ende luft- oder wasserdicht verschlossen wird,
b. anschließend mit dem Inversionsverfahren in die Rohrleitung oder den Kanal eingebracht wird, und
c. anschließend das Harz ausgehärtet wird.

Weitere praktische Ausführungsformen und Vorteile der Erfindung sind nachfolgend im Zusammenhang mit den Zeichnungen beschrieben. Es zeigen in einer bevorzugten Ausführungsform:

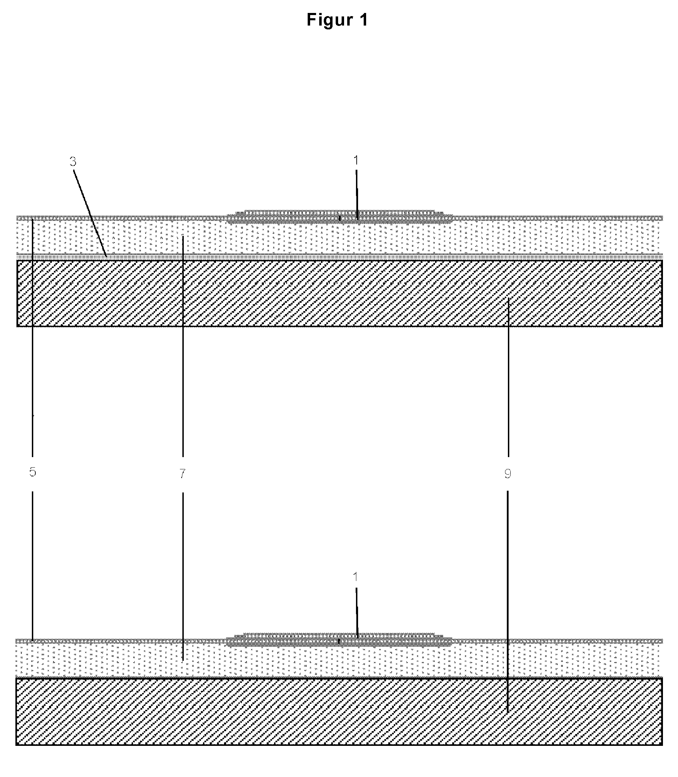

Fig. 1 zeigt den erfindungsgemäßen Liner in eingebautem Zustand. Das schadhafte Altrohr (9) ist in der oberen Ausführungsform zunächst mit dem Preliner (3) in Kontakt. In der unteren Ausführungsform ist im Anschluss an das Altrohr (9) direkt das Gestrick (7) abgebildet. Vom Altrohr abgewandt ist die die vor dem Einbau außen liegende Polymerfolie bzw. Polymerschicht (5) angeordnet. An der Naht (1) der Polymerfolie bzw. Polymerschicht ist außen ein Abdeckband angeordnet.

### Ausführungsbeispiel

Es wurde ein Rundstrick aus Glasfaser mit einem Durchmesser von 20 cm und einer Länge von 2 m nach bekannten Verfahren hergestellt (z.B. WO 2014 012 130 A1). Die Glasfasern hatten ein Fasergewicht von 600 tex. Das Gestrick hatte eine Dicke von 3 mm und ein Flächengewicht von 800 g/m².

Anschließend wurde ein vernadeltes Polypropylenvlies mit einem Flächengewicht von 230 g/m² in der Länge des Rundstricks und einer Breite des Außenumfangs des Rundstricks bereitgestellt. Auf die eine Seite wurde eine dehnbare und elastische Polyurethanfolie aufkaschiert. Diese hatte eine Dicke von 180 µm. Auf der anderen Seite des Vlieses wurde in Längsrichtung ein Polyestervliesband (Band aus synthetischen Fasern) über die gesamte Länge des Vlieses befestigt. Dieses ansonsten übliche Band wies 30 Endlosfasern aus Polyestergarn auf, die sich in Längsrichtung über die gesamte Länge des Bandes erstreckten. In diesem Fall hatte das Band ein Flächengewicht von 97 g/m²..

Das so mit Folie und Band versehene Vlies wurde mit der Folie nach außen um den Rundstrick gelegt. Auf die Stoßfuge wurde ein 50 mm breites Abdeckband aus PU gelegt, das mit der Außenfolie verschweißt wurde.

Der so entstandene Hausanschlussliner konnte anschließend mit handelsüblichem EP Harz getränkt werden und nach üblichen Verfahren der Kanalsanierung wie dem Inversionsverfahren in einen Hausanschlusskanal eingebracht und ausgehärtet werden.

Durch die hohe Elastizität durch den Schlauchstrick und die Längsdehnungsbremse durch das Band mit Endlosfasern konnte eine sehr gleichmäßige Schichtdicke des ausgehärteten Liners ohne unerwünschte Längsdehnung erzielt werden.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

## Patentansprüche

1. Liner für die Kanalsanierung, **dadurch gekennzeichnet, dass** der Liner
a. ein Gestrick, und
b. eine Längsdehnungsbremse aufweist.

2. Liner gemäß Anspruch 1, **dadurch gekennzeichnet, dass** der Liner enthält wenigstens 50 Gew.%, ganz besonders bevorzugt wenigstens 60 Gew.% Gestrick in Bezug auf den gesamten Anteil an faserhaltigen Materialien enthält.

3. Liner gemäß Anspruch 1 oder 2, **dadurch gekennzeichnet, dass** das Gestrick rundgestrickt ist.

4. Liner gemäß einem der Ansprüche 1 bis 3, **dadurch gekennzeichnet, dass** die Längsdehnungsbremse Bremsfasern in Längsrichtung des Liners umfasst.

5. Liner gemäß einem der Ansprüche 1 bis 4, **dadurch gekennzeichnet, dass** der Liner bis zu 2 Gew.%, ganz besonders bevorzugt bis zu 1 Gew.% Längsdehnungsbremse in Bezug auf den gesamten Anteil an faserhaltigen Materialien enthält.

6. Liner gemäß einem der Ansprüche 1 bis 5, **dadurch gekennzeichnet, dass** die Längsdehnungsbremse, und insbesondere die Bremsfasern, in Form eines Streifens in Längsrichtung des Liners angeordnet ist.

7. Liner gemäß einem der Ansprüche 1 bis 6, **dadurch gekennzeichnet, dass** außen um das Gestrick und die Längsdehnungsbremse ein Vlies angeordnet ist.

8. Liner gemäß einem der Ansprüche 1 bis 7, **dadurch gekennzeichnet, dass** außen auf dem Vlies eine Polymerfolie oder eine Polymerschicht angeordnet ist.

9. Kanal oder Rohrleitung, auf deren Innenseite ein Liner gemäß einem der Ansprüche 1 bis 8 angebracht ist.

10. Verfahren zur Sanierung einer Rohrleitung oder eines Kanals, **dadurch gekennzeichnet, dass** der mit Harz imprägnierte Liner gemäß einem der Ansprüche 1 bis 8
a. an einem Ende luft- oder wasserdicht verschlossen wird,
b. anschließend mit dem Inversionsverfahren in die Rohrleitung oder den Kanal eingebracht wird, und
c. anschließend das Harz ausgehärtet wird.
